Europäisches Patentamt

European Patent Office

Office européen des brevets

(11) Publication number: 0 306 176
A1

## (12) EUROPEAN PATENT APPLICATION

(21) Application number: 88307601.0

(22) Date of filing: 17.08.88

(51) Int. Cl.⁴: F04D 15/00 , F02C 7/236

(30) Priority: 01.09.87 GB 8720524

(43) Date of publication of application:
08.03.89 Bulletin 89/10

(84) Designated Contracting States:
DE ES FR IT

(71) Applicant: PLESSEY OVERSEAS LIMITED
Vicarage Lane
Ilford Essex IGl 4AQ(GB)

(72) Inventor: Taylor, Peter John
19 Clarendon Cres Titchfield Common
Fareham Hants, PO14 4RE(GB)

(74) Representative: Nicholson, Ronald
Intellectual Property Department The
Plessey Company plc 2-60 Vicarage Lane
Ilford Essex IG1 4AQ(GB)

(54) Improvements relating to liquid pumps.

(57) A double-ended booster liquid pump comprises first and second motor driven impellers (3, 4) located at respective inlet ports (1, 2) to the pump. A third motor driven impeller (6) is arranged to be supplied with liquid from the respective inlets (1, 2) through the first and second impellers (3, 4). Liquid bypass means (8) is provided between a liquid inlet to the third impeller (6) and an outlet port (7) from the pump and valve means (9) is arranged to close off the bypass means (8) when the liquid flow through the third impeller (6) is at a relatively low level. However, when the third impeller (6) attempts to exceed the normal maximum liquid flow therethrough the pressure at the pump outlet port (7) falls to the delivery pressure of the first and second impellers (3, 4) and the valve means (9) is actuated to cause liquid flow through the bypass means (8) to augment the liquid flow from the third impeller (6).

## IMPROVEMENTS RELATING TO LIQUID PUMPS

This invention relates to liquid pumps (e.g. fuel pumps) and relates more specifically to so-called double-ended booster pumps principally for use as fuel pumps in aircraft.

According to the present invention there is provided a double-ended booster liquid pump comprising first and second motor driven impellers located at respective inlet ports to the pump and a third motor driven impeller arranged to be supplied with liquid from the respective inlets through the first and second impellers, characterised in that liquid bypass means is provided between a liquid inlet to the third impeller and an outlet port from the pump and in that valve means is arranged to at least restrict and preferably close off the bypass means when the liquid flow through the third impeller is at a relatively low level but when the third impeller attempts to exceed the normal maximum liquid flow therethrough the pressure at the pump outlet port falls to the delivery pressure of the first and second impellers and the valve means is actuated to cause liquid flow through the bypass means to augment the liquid flow from the third impeller.

The construction of booster pump according to the present invention modifies the usual pressure rise/flow characteristics of the pump in order to reduce the input power to the pump motor means to meet various demands made on the liquid pump by an associated engine for example.

By way of example the present invention will now be described with reference to the accompanying drawings in which:

Figure 1 is a diagramatic cross-sectional view of a double-ended booster pump according to the present invention;

Figure 2 shows a normal fuel pressure rise/flow characteristic design curve for an aircraft double-ended booster fuel pump to meet specific engine fuel demands;

Figure 3 is a fuel pressure rise/flow characteristic of the pump in Figure 1; and ,

Figure 4 shows a comparison between the normal and modified curves of Figures 2 and 3 and resultant power savings.

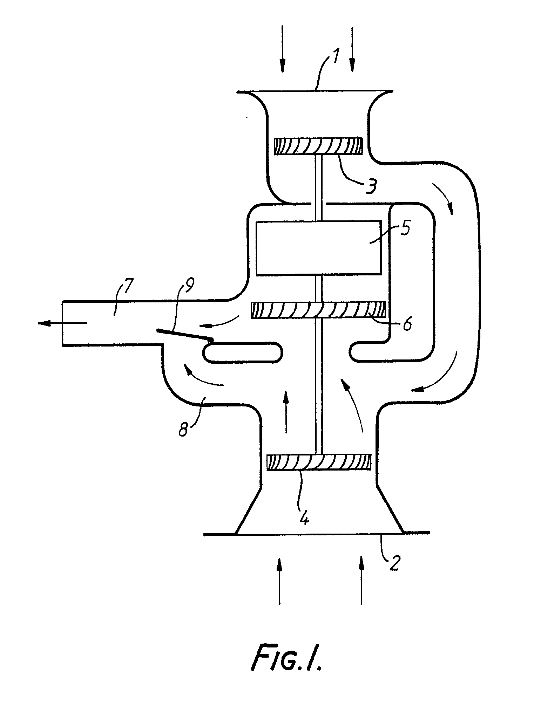

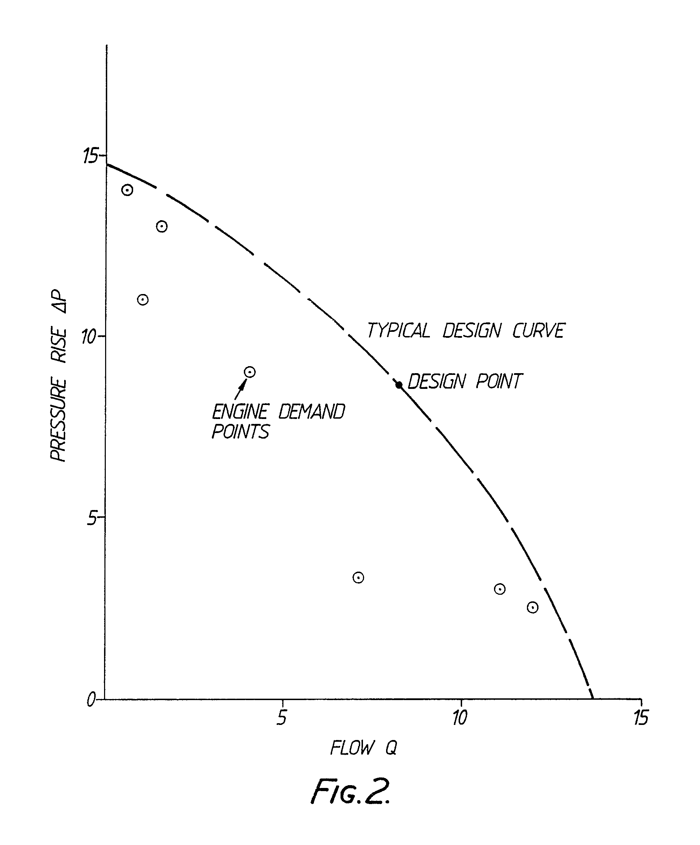

Referring to Figure 1 of the drawings the double-ended booster fuel pump illustrated comprises fuel inlet ports 1 and 2 in which are located first and second impellers 3 and 4 arranged to be driven by means of an electric motor 5. The fuel deliveries from the impellers 3 and 4 are supplied to the inlet of a third (ie. main) impeller 6 having a delivery or outlet port 7. Thus far the pump construction described with reference to Figure 1 is the same as a conventional double-ended booster pump and the normal method of designing such a pump is to plot a pressure rise/flow curve of aircraft engine demands as shown in Figure 2 and then to draw a suitable curve through these engine demand points and design the hydraulics and pump motor to meet these engine demand points.

In accordance with the invention however a fuel by-pass 8 is provided which extends between the input and to the main impeller 6 and the output point 7 of the pump. A flap valve 9 is provided to open or close off the by-pass 8 according to the pressure obtaining at the output of the impeller 6.

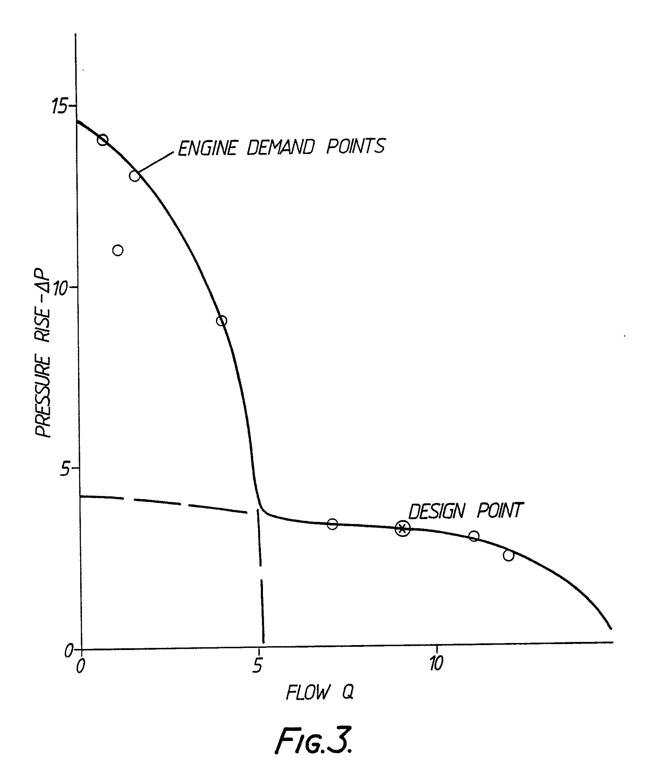

By referring to Figure 3 it can be seen that when the flow through the main impeller 6 is relatively low it overcomes the pressure from the impellers 3 and 4 and causes the flap valve 9 to close off the bypass 8. However, when the impeller 6 attempts to exceed its normal maximum flow the pressure at its delivery point falls to the delivery pressure from the other two impellers 3 and 4 and flap valve 9 opens to allow the fuel flow from the impeller 6 to be augmented via the bypass 8. The resultant pressure rise/flow characteristic curve is depicted in Figure 3.

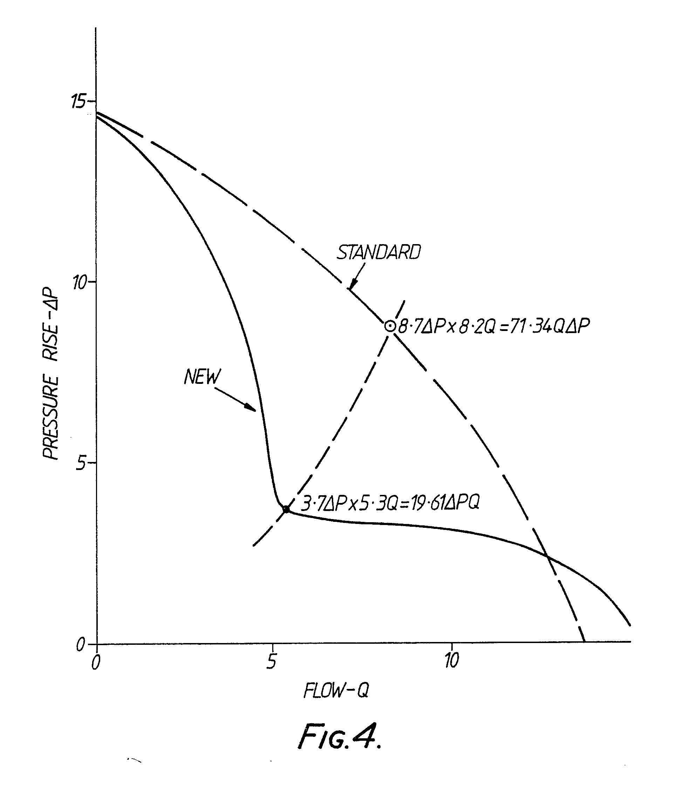

By comparing the characteristic curves of Figures 2 and 3 shown in Figure 4 it can readily be seen that the input power to the pump motor to meet the specified engine demand points A and B is reduced from $\Delta P \times Q$ of 71.34 to $\Delta P \times Q$ of 19.61, assuming similar hydraulic and motor efficiencies.

## Claims

1. A double-ended booster liquid pump comprising first and second motor driven impellers located at respective inlet ports to the pump and a third motor driven impeller arranged to be supplied with liquid from the respective inlets through the first and second impellers, characterised in that liquid bypass means is provided between a liquid inlet to the third impeller and an outlet port from the pump and in that valve means is arranged to at least restrict the bypass means when the liquid flow through the third impeller is at a relatively low level but when the third impeller attempts to exceed the normal maximum liquid flow therethrough the pressure at the pump outlet port falls to the delivery pressure to the first and second impellers and the valve means is actuated to cause liquid flow through the bypass means to augment the liquid flow from the third impeller.

2. A double-ended booster liquid pump as claimed in claim 1, in which the valve means closes off the liquid bypass means.

3. A double-ended booster liquid pump as claimed in claim 2, in which the valve means comprises a flap valve.

TYPICAL DESIGN CURVE

DESIGN POINT

ENGINE DEMAND POINTS

PRESSURE RISE ΔP

FLOW Q

FIG.2.

*FIG.3.*

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | DE-A-2 027 097 (LOEWE)<br>* Claim 1 *<br>--- | 1-3 | F 04 D 15/00<br>F 02 C 7/236 |
| Y | GB-A- 839 754 (SPE)<br>* Claim 1; figure 1 *<br>--- | 1-3 | |
| Y | PATENT ABSTRACTS OF JAPAN, vol. 7, no. 31 (M-192)[1176], 8th February 1983; & JP-A-57 186 090 (HITACHI SEISAKUSHO K.K.) 16-11-1982<br>* Whole document *<br>--- | 1-3 | |
| A | GB-A- 913 483 (G.M.)<br>--- | | |
| A | US-A-4 240 370 (LUBIN)<br>----- | | |
| | | | TECHNICAL FIELDS SEARCHED (Int. Cl.4) |
| | | | F 04 D<br>F 02 M<br>F 02 C |

The present search report has been drawn up for all claims

| Place of search | Date of completion of the search | Examiner |
|---|---|---|
| THE HAGUE | 28-10-1988 | WALVOORT B.W. |

EPO FORM 1503 03.82 (P0401)